# FASCICULE DE BREVET EUROPEEN

(11) **EP 2 879 776 B1**
(45) Date de publication et mention de la délivrance du brevet: **16.11.2016**
(21) Numéro de dépôt: 13741677.2
(22) Date de dépôt: 24.07.2013
(51) Int. Cl.: B01D 39/16

(54) **FILTRE ANTI- ALLERGENE ET SYSTEME DE VENTILATION D'AIR DE L'HABITACLE D'UN VEHICULE AUTOMOBILE ASSOCIE**
ANTIALLERGENFILTER UND ENTSPRECHENDE BELÜFTUNGSANLAGE EINES INNENRAUMES VON EINEM FAHRZEUG
ANTIALLERGENIC FILTER AND RELATED AIR VENTILATION SYSTEM FOR THE PASSENGER COMPARTMENT OF AN AUTOMOBILE

(30) Priorité: 02.08.2012 FR 1202170
(43) Date de publication de la demande: 10.06.2015
(73) Titulaire: Valeo Transmissions - Materiaux de Friction, 87020 Limoges Cedex 9 (FR)
(72) Inventeur: RIOU, Mélanie, F-14110 Condé sur Noireau (FR)
(74) Mandataire: Pellegrini, Marie Claude
(86) Numéro de dépôt international: PCT/EP2013/002197
(87) Numéro de publication internationale: WO 2014/019660

(56) Documents cités:
- EP-A2- 1 985 350
- US-A- 3 781 248
- US-A- 5 888 527
- US-A1- 2006 278 086
- US-A1- 2008 022 645

## Description

L'invention concerne principalement un filtre anti-allergène.

L'invention concerne également un système de ventilation d'air de l'habitacle d'un véhicule automobile comportant un tel filtre.

Les systèmes de ventilation d'air de l'habitacle d'un véhicule automobile, tels que les systèmes de climatisation, impliquent la filtration de l'air entrant dans l'habitacle.

Devant l'augmentation du nombre de personnes allergiques, il est nécessaire de renforcer l'efficacité de filtration, en particulier pour le conducteur pour lequel l'apparition de symptômes allergiques, en particulier des éternuements, peut mettre en danger la sécurité des occupants du véhicule.

Par ailleurs, la destruction des acariens n'est pas une action suffisante car les corps morts des acariens ainsi que leurs excréments comportent également des substances allergisantes.

Dans ce contexte, la présente invention vise un filtre anti-allergène permettant d'éviter l'apparition des symptômes allergiques pour les personnes en contact avec l'air filtré.

Les documents US 2006/278086 A1, EP 1 958 350 A2, US2008/022645A1 et US 5 888 527 A décrivent des filtres anti-allergènes comportant au moins un substrat de filtration contenant au moins un agent anti-allergène choisi parmi les polyphénols de la famille des tannins.

Le filtre de l'invention comporte un substrat de filtration contenant au moins un agent anti-allergène choisi parmi les polyphénols de la famille des tannins, essentiellement caractérisé en ce que le substrat de filtration comporte un copolymère polyacrylonitrile de chlorure de vinyle dont le teneur en poids par rapport au poids total du substrat de filtration massique est comprise entre 0,5 et 10%.

Le filtre anti-allergène de l'invention peut également comporter les caractéristiques optionnelles suivantes considérées isolément ou selon toutes les
- le substrat de filtration comporte de l'urée dont la teneur en poids par rapport au poids total du substrat de filtration est comprise entre 0,1 et 3%.
- le substrat de filtration est réalisé à base d'un tissu non tissé
- le substrat de filtration comprend au moins une couche interne, notamment en polyéthylène téréphtalate
- le substrat de filtration comprend une couche externe, notamment en polyamide.
- le filtre de l'invention comporte une succession de couches filtrantes comportant dans l'ordre et dans le sens du flux d'air traité par le filtre le substrat de filtration, une couche de polypropylène ou de polyéther non tissée et cardée, et une couche de polypropylène non tissé obtenue par un procédé de « fusion-soufflage ».
- le filtre de l'invention comporte une couche de charbon actif disposée entre la couche de polypropylène ou de polyéther non tissée et cardée et le substrat de filtration.
- le filtre de l'invention est plissé.
- le substrat de filtration est imprégné d'une substance anti-allergène comportant les agents suivants :

| Agent | Teneur exprimée en % en poids par rapport au poids total du substrat de filtration non tissé (11) |
|---|---|
| Acide tannique | 0,1 - 5 |
| Oxyde de zinc | 0,05 - 0,2 |
| Dioxyde de titane | 0,1 - 3 |
| Urée | 0,1 - 3 |
| Composés de Zirconyl | 0,1 - 5 |
| Copolymère polyacrylonitrile de chlorure de vinyle | 0.5 - 10 |
| Pigments | 0,05 - 0,2 |

L'invention porte également sur un système de ventilation d'air d'habitacle de véhicule automobile qui est essentiellement caractérisé en ce qu'il comporte au moins un filtre tel que précédemment défini.

D'autres caractéristiques et avantages de l'invention ressortiront clairement de la description qui en est donnée ci-dessous, à titre indicatif et nullement limitatif, en référence aux figures annexées parmi lesquelles :
- la figure 1 est une représentation schématique en coupe d'un filtre de l'art antérieur,
- la figure 2 est une représentation schématique en coupe du filtre anti-allergène de l'invention selon une première variante.
- la figure 3 est une représentation schématique en coupe du filtre anti-allergène de l'invention selon une seconde variante.

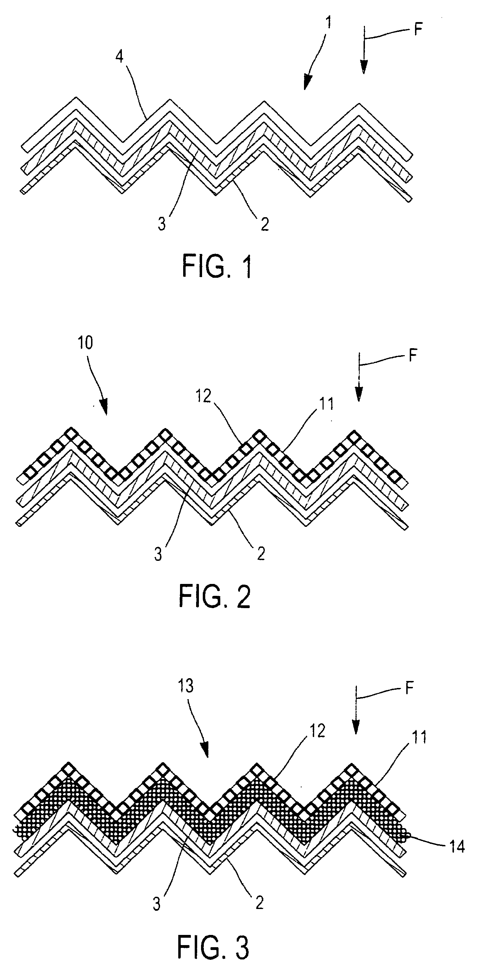

En référence à la figure 1, un filtre de l'art antérieur 1 comprend une succession de couches filtrantes constituées dans l'ordre du sens du flux d'air d'un substrat de filtration non tissé 4, d'une couche de polypropylène ou de polyéther non tissée 3 et d'une couche de polypropylène non tissée 2.

La couche substrat de filtration non tissé 4 comporte une couche interne en polyéthylène téréphtalate et une couche externe en polyamide et est située du côté de l'arrivée de l'air à filtrer illustrée par la flèche F.

Par ailleurs la couche de polypropylène non tissée 2 est obtenue par un procédé de « fusion-soufflage » plus communément appelé « meltblown ». La couche de polypropylène ou de polyéther non tissée 3 est dite cardée en ce qu'elle est obtenue par un procédé de cardage.

Il est également connu d'insérer une couche de charbon actif entre la couche de polypropylène ou de polyéther non tissée 3 et le substrat de filtration non tissé 4. Le charbon actif permet d'absorber les gaz contenus dans l'air à filtrer.

Le filtre 1 de l'art antérieur est plissé de façon à augmenter la surface de contact entre les différentes couches filtrantes et l'air à traiter.

Dans la description du filtre de l'invention qui suit, les références communes aux éléments de l'art antérieur sont reprises à l'identique.

En référence à la figure 2 et selon une première variante de l'invention, le filtre de l'invention 10 est identique au filtre de l'art antérieur de la figure 1 en ce qu'il comprend une succession de couches filtrantes constituées dans l'ordre et dans le sens du flux d'air d'un substrat de filtration non tissé 11, d'une couche de polypropylène ou de polyéther non tissée et cardée 3 et d'une couche de polypropylène non tissée 2 obtenue par procédé de « fusion-soufflage ».

La densité de la couche de polypropylène non tissée 2 est comprise entre 10 et 50 g/m², de préférence entre 15 et 20 g/m².

La densité de la couche de polypropylène ou de polyéther non tissée et cardée 3 est comprise entre 30 et 100 g/m², de préférence entre 40 et 80 g/ m².

Enfin, la densité du substrat de filtration est comprise entre 10 et 100 g/ m², de préférence de 75 g/m².

Selon l'invention, le substrat de filtration non tissé 11 est imprégné d'une substance anti-allergène 12 dont la teneur en poids par rapport au poids total du substrat de filtration 11 est comprise entre 1 et 10%.

La substance anti-allergène 12 comporte les agents définis dans le Tableau 1.

**Tableau 1**

| Agent | Teneur exprimée en % en poids par rapport au poids total du substrat de filtration non tissé 11 |
|---|---|
| Acide tannique | 0,1 - 5 |
| Oxyde de zinc | 0,05 - 0,2 |
| Dioxyde de titane | 0,1 - 3 |
| Urée | 0,1 - 3 |
| Composés de Zirconyl | 0,1 - 5 |
| Copolymère polyacrylonitrile de chlorure de vinyle | 0,5 - 10 |
| Pigments | 0,05 - 0,2 |

L'acide tannique est un polyphénol de la famille des tannins. Comme le montre les résultats présentés plus loin, ces composés, et en particulier l'acide tannique, permettent d'inhiber les allergènes et de les rendre ainsi inactifs lorsqu'ils sont en contact avec la peau ou les voies respiratoires.

L'oxyde de zinc est un anti-bactérien. Le dioxyde de titane est un anti-microbien et un purifiant.

L'urée possède des propriétés de dénaturation des protéines par fragilisation des liaisons hydrogènes de ces protéines.

Le zirconyl augmente la résistance à l'abrasion mais également la résistance aux hautes températures.

Enfin, le copolymère polyacrylonitrile de chlorure de vinyle permet de ralentir la propagation des flammes et modifie l'état de surface du substrat de filtration non tissé 11.

En référence à la figure 3, le filtre de l'invention 13 selon une seconde variante peut en outre comporter une couche de charbon actif 14 disposée entre la couche de polypropylène ou de polyéther non tissée 3 et le substrat de filtration 11.

La densité de la couche de charbon actif 14 est comprise entre 150 et 450 g/m².

Par ailleurs, la taille des particules retenues par le filtre de l'invention 10, 13 des première et seconde variantes est supérieure à 0,1 micromètre.

L'efficacité du filtre de l'invention des première et seconde variantes est déterminée par des tests ELISA selon lesquels le filtre doit garantir une inhibition des allergènes supérieure à 70% dans les contraintes environnementales suivantes :
- 24 heures à 100°C
- 48h à 55°C et 95%HR
- 24h à -40°C
- immersion de 3 minutes dans de l'eau distillée
- immersion de 5 minutes dans du produit lave vitre

Les pollens ayant fait l'objet de ces tests sont des pollens de bouleau et d'ambroisie.

Les résultats montrent que le filtre de l'invention permet d'inhiber les allergènes selon les critères requis pour toutes les contraintes environnementales énumérées précédemment.

L'action du filtre de l'invention est ainsi double. En effet, le filtre de l'invention permet d'une part de purifier l'air entrant dans l'habitacle, mais également d'inhiber les allergènes et d'empêcher les réactions allergiques du conducteur et des passagers d'un véhicule automobile.

Le filtre de l'invention peut être monté sur un système existant et connu de ventilation d'air, notamment un système de climatisation, en se substituant aux filtres utilisés dans ces systèmes.

## Revendications

1. Filtre anti-allergène comportant au moins un substrat de filtration (11), le substrat de filtration (11) contenant au moins un agent anti-allergène choisi parmi les polyphénols de la famille des tannins, **caractérisé en ce que** le substrat de filtration comporte un copolymère polyacrylonitrile de chlorure de vinyle dont la teneur en poids par rapport au poids total du substrat de filtration (11) massique est comprise entre 0,5 et 10%.

2. Filtre anti-allergène selon la revendication 1, **caractérisé en ce que** l'agent anti-allergène est l'acide tannique dont la teneur en poids par rapport au poids total du substrat de filtration (11) est comprise entre 0,1 et 5%.

3. Filtre anti-allergène selon l'une quelconque des revendications 1 et 2, **caractérisé en ce que** le substrat de filtration (11) comporte au moins un agent anti-bactérien.

4. Filtre anti-allergène selon la revendication 3, **caractérisé en ce que** l'agent anti-bactérien est l'oxyde de zinc dont la teneur en poids par rapport au poids total du substrat de filtration (11) est comprise entre 0,05 et 0,2%.

5. Filtre anti-allergène selon l'une quelconque des revendications précédentes, **caractérisé en ce que** le substrat de filtration (11) comporte un agent anti-microbien.

6. Filtre anti-allergène selon la revendication 5, **caractérisé en ce que** l'agent anti-microbien est le dioxyde de titane dont la teneur en poids par rapport au poids total du substrat de filtration (11) est comprise entre 0,1 et 3%.

7. Filtre anti-allergène selon l'une quelconque des revendications précédentes, **caractérisé en ce que** le substrat de filtration (11) comporte de l'urée dont la teneur en poids par rapport au poids total du substrat de filtration (11) est comprise entre 0,1 et 3%.

8. Filtre selon l'une quelconque des revendications précédentes, **caractérisé en ce que** le substrat de filtration (11) est réalisé à base d'un tissu non tissé.

9. Filtre selon l'une quelconque des revendications précédentes, **caractérisé en ce que** le substrat de filtration (11) comprend au moins une couche interne, par exemple en polyéthylène téréphtalate.

10. Filtre selon la revendication précédente, **caractérisé en ce que** le substrat de filtration (11) comprend une couche externe, par exemple en polyamide.

11. Filtre selon l'une quelconque des revendications précédentes, **caractérisé en ce qu'**il comprend une succession de couches filtrantes comportant dans l'ordre et dans le sens du flux d'air traité par le filtre (10,13) le substrat de filtration (11), une couche de polypropylène ou de polyéther non tissée et cardée (3), et une couche de polypropylène non tissé (2) obtenue par un procédé de « fusion-soufflage ».

12. Filtre selon la revendication précédente, **caractérisé en ce qu'**il comporte une couche de charbon actif (14) disposée entre la couche de polypropylène ou de polyéther non tissée et cardée (3) et le substrat de filtration (11).

13. Filtre selon l'une quelconque des revendications précédentes, **caractérisé en ce qu'**il est plissé.

14. Filtre selon l'une quelconque des revendications précédentes, **caractérisé en ce que** le substrat de filtration (11) est imprégné d'une substance anti-allergène (12) comportant les agents suivants :
| Agent | Teneur exprimée en % en poids par rapport au poids total du substrat de filtration non tissé (11) |
|---|---|
| Acide tannique | 0,1 - 5 |
| Oxyde de zinc | 0,05 - 0,2 |
| Dioxyde de titane | 0,1 - 3 |
| Urée | 0,1 - 3 |
| Composés de Zirconyl | 0,1 - 5 |
| Copolymère polyacrylonitrile de chlorure de vinyle | 0,5 - 10 |
| Pigments | 0,05 - 0,2 |

15. Système de ventilation d'air d'un habitacle de véhicule automobile, **caractérisé en ce qu'**il comporte au moins un filtre (10,13) selon l'une quelconque des revendications précédentes.

## Patentansprüche

1. Antiallergen-Filter, umfassend mindestens ein Filtrationssubstrat (11), wobei das Filtrationssubstrat mindestens ein antiallergenes Mittel, das aus Polyphenolen der Tannin-Familie ausgewählt ist, enthält, **dadurch gekennzeichnet, dass** das Filtrationssubstrat ein Polyacrylnitril-Copolymer von Vinylchlorid umfasst, dessen Gewichtsanteil, bezogen auf das Gesamtgewicht des Filtrationssubstrats (11), zwischen 0,5 und 10% liegt.

2. Antiallergen-Filter nach Anspruch 1, **dadurch gekennzeichnet, dass** es sich bei dem antiallergenen Mittel um Tanninsäure handelt, deren Gewichtsanteil, bezogen auf das Gesamtgewicht des Filtrationssubstrats (11), zwischen 0,1 und 5% liegt.

3. Antiallergen-Filter nach einem der Ansprüche 1 und 2, **dadurch gekennzeichnet, dass** das Filtrationssubstrat (11) mindestens ein antibakterielles Mittel umfasst.

4. Antiallergen-Filter nach Anspruch 3, **dadurch gekennzeichnet, dass** es sich bei dem antibakteriellen Mittel um Zinkoxid handelt, dessen Gewichtsanteil, bezogen auf das Gesamtgewicht des Filtrationssubstrats (11), zwischen 0,05 und 0,2% liegt.

5. Antiallergen-Filter nach einem der vorhergehenden Ansprüche, **dadurch gekennzeichnet, dass** das Filtrationssubstrat (11) ein antimikrobielles Mittel umfasst.

6. Antiallergen-Filter nach Anspruch 5, **dadurch gekennzeichnet, dass** es sich bei dem antimikrobiellen Mittel um Titandioxid handelt, dessen Gewichtsanteil, bezogen auf das Gesamtgewicht des Filtrationssubstrats (11), zwischen 0,1 und 3% liegt.

7. Antiallergen-Filter nach einem der vorhergehenden Ansprüche, **dadurch gekennzeichnet, dass** das Filtrationssubstrat (11) Harnstoff umfasst, dessen Gewichtsanteil, bezogen auf das Gesamtgewicht des Filtrationssubstrats (11), zwischen 0,1 und 3% liegt.

8. Filter nach einem der vorhergehenden Ansprüche, **dadurch gekennzeichnet, dass** das Filtrationssubstrat (11) auf der Basis eines Vliesstoffs hergestellt worden ist.

9. Filter nach einem der vorhergehenden Ansprüche, **dadurch gekennzeichnet, dass** das Filtrationssubstrat (11) mindestens eine innere Schicht, beispielsweise aus Polyethylenterephthalat, umfasst.

10. Filter nach dem vorhergehenden Anspruch, **dadurch gekennzeichnet, dass** das Filtrationssubstrat (11) eine äußere Schicht, beispielsweise aus Polyamid, umfasst.

11. Filter nach einem der vorhergehenden Ansprüche, **dadurch gekennzeichnet, dass** er eine Abfolge von Filterschichten umfasst, die in der angegebenen Reihenfolge und in der Richtung des durch den Filter behandelten Luftstroms (10, 13) das Filtrationssubstrat (11), eine kardierte Vliesschicht aus Polypropylen oder Polyether (3) und eine durch ein Schmelzblasverfahren erhaltene Vliesschicht aus Polypropylen (2) umfasst.

12. Filter nach dem vorhergehenden Anspruch, **dadurch gekennzeichnet, dass** er eine Aktivkohleschicht (14) umfasst, die zwischen der kardierten Vliesschicht aus Polypropylen oder Polyether (3) und dem Filtrationssubstrat (11) angeordnet ist.

13. Filter nach einem der vorhergehenden Ansprüche, **dadurch gekennzeichnet, dass** er plissiert ist.

14. Filter nach einem der vorhergehenden Ansprüche, **dadurch gekennzeichnet, dass** das Filtrationssubstrat (11) mit einer antiallergenen Substanz (12) imprägniert ist, die die folgenden Mittel umfasst:
| Mittel | Gehalt, ausgedrückt in Gew.-%, bezogen auf das Gesamtgewicht des Vliesfiltrationssubstrats (11) |
|---|---|
| Tanninsäure | 0,1-5 |
| Zinkoxid | 0,05-0,2 |
| Titandioxid | 0,1-3 |
| Harnstoff | 0,1-3 |
| Zirconylverbindungen | 0,1-5 |
| Polyacrylnitril-Copolymer von Vinylchlorid | 0,5-10 |
| Pigmente | 0,05-0,2 |

15. Luftventilationssystem für den Innenraum eines Kraftfahrzeugs, **dadurch gekennzeichnet, dass** es mindestens einen Filter (10, 13) nach einem der vorhergehenden Ansprüche umfasst.

## Claims

1. Antiallergenic filter comprising at least one filtration substrate (11), the filtration substrate (11) containing at least one antiallergenic agent selected from the polyphenols of the tannin family, **characterized in that** the filtration substrate comprises an acrylonitrile-vinyl chloride copolymer, the weight content of which relative to the total weight of the filtration substrate (11) is between 0.5% and 10%.

2. Antiallergenic filter according to Claim 1, **characterized in that** the antiallergenic agent is tannic acid, the weight content of which relative to the total weight of the filtration substrate (11) is between 0.1% and 5%.

3. Antiallergenic filter according to either one of Claims 1 and 2, **characterized in that** the filtration substrate (11) comprises at least one antibacterial agent.

4. Antiallergenic filter according to Claim 3, **characterized in that** the antibacterial agent is zinc oxide, the weight content of which relative to the total weight of the filtration substrate (11) is between 0.05% and 0.2%.

5. Antiallergenic filter according to any one of the preceding claims, **characterized in that** the filtration substrate (11) comprises an antimicrobial agent.

6. Antiallergenic filter according to Claim 5, **characterized in that** the antimicrobial agent is titanium dioxide, the weight content of which relative to the total weight of the filtration substrate (11) is between 0.1% and 3%.

7. Antiallergenic filter according to any one of the preceding claims, **characterized in that** the filtration substrate (11) comprises urea, the weight content of which relative to the total weight of the filtration substrate (11) is between 0.1% and 3%.

8. Filter according to any one of the preceding claims, **characterized in that** the filtration substrate (11) is produced based on a nonwoven fabric.

9. Filter according to any one of the preceding claims, **characterized in that** the filtration substrate (11) comprises at least one inner layer, for example made of polyethylene terephthalate.

10. Filter according to the preceding claim, **characterized in that** the filtration substrate (11) comprises an outer layer, for example made of polyamide.

11. Filter according to any one of the preceding claims, **characterized in that** it comprises a series of filter layers comprising, in order and in the direction of the airflow treated by the filter (10, 13), the filtration substrate (11), a nonwoven and carded polypropylene or polyether layer (3), and a nonwoven polypropylene layer (2) obtained by a "melt blowing" process.

12. Filter according to the preceding claim, **characterized in that** it comprises an activated carbon layer (14) positioned between the nonwoven and carded polypropylene or polyether layer (3) and the filtration substrate (11).

13. Filter according to any one of the preceding claims, **characterized in that** it is pleated.

14. Filter according to any one of the preceding claims, **characterized in that** the filtration substrate (11) is impregnated with an antiallergenic substance (12) comprising the following agents:
| Agent | Content expressed in % by weight relative to the total weight of the nonwoven filtration substrate (11) |
|---|---|
| Tannic acid | 0.1-5 |
| Zinc oxide | 0.05-0.2 |
| Titanium dioxide | 0.1-3 |
| Urea | 0.1-3 |
| Zirconyl compounds | 0.1-5 |
| Acrylonitrile-vinyl chloride copolymer | 0.5-10 |
| Pigments | 0.05-0.2 |

15. Air ventilation system of a motor vehicle interior, **characterized in that** it comprises at least one filter (10, 13) according to any one of the preceding claims.
